# FASCICULE DE BREVET EUROPEEN

(11) **EP 3 731 544 B1**
(45) Date de publication et mention de la délivrance du brevet: **29.05.2024**
(21) Numéro de dépôt: 20171169.4
(22) Date de dépôt: 23.04.2020
(51) Int. Cl.: H04W 4/08, H04W 4/02, H04W 4/90

(54) **RESEAU DE COMMUNICATION COMPRENANT DES GROUPES DE SIGNALISATION**
KOMMUNIKATIONSNETZWERK BESTEHEND AUS SIGNALISIERUNGSGRUPPEN
COMMUNICATION NETWORK COMPRISING SIGNALING GROUPS

(30) Priorité: 25.04.2019 FR 1904388
(43) Date de publication de la demande: 28.10.2020
(73) Titulaire: Airbus DS SLC, 78990 Elancourt (FR)
(72) Inventeur: PATEROUR, Olivier, 78280 GUYANCOURT (FR); LAFFITTE, Pascal, 91700 Sainte Geneviève des Bois (FR)
(74) Mandataire: Cabinet Camus Lebkiri

(56) Documents cités:
- FR-A1- 3 080 730
- UIC ET AL: "Functional Alias enhancements (chapter 5.9a)", 3GPP DRAFT; 22280_CR0055R5_(REL-16)_S1-180565_WAS_S1-1 80532_WAS_S1-180513_WAS_S1-180447_WAS_S1-1 80430_WAS_S1-180112_TS 22.280_CR_CHAPTER 3.1_ 5.9A FUNCTIONAL ALIAS, 3RD GENERATION PARTNERSHIP PROJECT , vol. SA WG1, no. Fukuoka, Japan; 20180205 - 20180209 19 mars 2018 (2018-03-19), XP051412074, Extrait de l'Internet: URL:http://www.3gpp.org/ftp/Meetings%5F3GP P%5FSYNC/SA/Docs/ [extrait le 2018-03-19]
- US DEPARTMENT OF COMMERCE: "Clarification of text in clause 5.4.1", 3GPP DRAFT; 22280_CR0016R1_(REL-14)_S1-162412, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. San Francisco, CA, USA; 20160822 - 20160826 13 septembre 2016 (2016-09-13), XP051679328, Extrait de l'Internet: URL:http://www.3gpp.org/ftp/tsg%5Fsa/TSG%5 FSA/TSGS%5F73/Docs/SP%2D160543%2Ezip [extrait le 2016-09-13]
- ERICSSON ET AL: "Enhanced control of User Regroup and Private Communication", 3GPP DRAFT; 22280_CR0053_(REL-16)_S1-180037, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Fukuoka, Japan; 20180105 - 20180109 14 mars 2018 (2018-03-14), XP051532047, Extrait de l'Internet: URL:http://www.3gpp.org/ftp/tsg%5Fsa/TSG%5 FSA/TSGS%5F79/Docs/SP%2D180134%2Ezip [extrait le 2018-03-14]
- MOTOROLA SOLUTIONS: "Group affiliation correction", 3GPP DRAFT; S6-181012 23_280 CR0109 REV 1 GROUP AFFILATION CORRECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. SA WG6, no. Sophia Antipolis, France; 20180723 - 20180727 23 juillet 2018 (2018-07-23), XP051471134, Extrait de l'Internet: URL:http://www.3gpp.org/ftp/Meetings%5F3GP P%5FSYNC/SA6/Docs [extrait le 2018-07-23]

## Description

### DOMAINE TECHNIQUE DE L'INVENTION

Le domaine technique de l'invention est celui des réseaux de communication et plus particulièrement celui de l'annonce de services disponibles à des utilisateurs au sein de réseaux de communication.

La présente invention concerne un réseau de communication et plus particulièrement un réseau de communication comprenant des groupes de signalisation permettant d'annoncer des disponibilités de services à des utilisateurs.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent d'annoncer la disponibilité d'un ou plusieurs services à des équipements utilisateurs lorsqu'ils sont situés dans une certaine zone, ou lorsqu'ils entrent dans une certaine zone. Ces annonces localisées sont réalisées via la couverture radio de stations de base du réseau : lorsque l'on souhaite annoncer qu'un service est disponible à un utilisateur situé à une certaine localisation, il suffit d'envoyer un message de signalisation à une station de base couvrant cette localisation, qui le diffuse aux équipements utilisateurs dans la zone radio qu'elle couvre. Ces communications utilisent un canal radio de contrôle permettant de faire de la signalisation radio.

Un équipement utilisateur recevant un message de signalisation dispose d'une intelligence embarquée et peut alors décider s'il est capable d'utiliser le service annoncé et/ou s'il y est autorisé grâce à des paramètres joints au message de signalisation. Par exemple, un équipement utilisateur localisé sur le lieu d'un évènement important peut recevoir une annonce de service comportant des paramètres définissant un niveau de droits de l'utilisateur pour utiliser le service annoncé. L'équipement utilisateur est alors en mesure de vérifier si l'utilisateur auquel il est associé a un niveau de droits suffisant ou non. L'équipement utilisateur sera alors en mesure d'utiliser le service annoncé si l'utilisateur auquel il est associé a un niveau de droits suffisant. Dans le cas contraire, il ne sera pas en mesure d'utiliser le service annoncé.

Dans le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services »,, de telles annonces de services ne sont pas prévues. En effet, le standard 3GPP MCS définit des protocoles de communications au niveau applicatif, il n'est donc pas possible de connaître une couverture réseau par exemple, ni d'utiliser des canaux radio de contrôle. En effet, les canaux radio de contrôle sont communs et connus de l'ensemble des utilisateurs quelle que soit la configuration des groupes et quelle que soit l'organisation à laquelle ils sont attachés, et représentent des zones géographiques de signalisation. Dans le standard 3GPP MCS, il n'y a pas de fonction équivalente prévue et il n'est pas simple d'adresser un message de signalisation à tous les équipements utilisateurs dans une certaine zone. Il n'est pas non plus simple d'annoncer une disponibilité de service à un ou plusieurs utilisateurs. En effet, des solutions permettent d'adresser ces deux problèmes et présentent des inconvénients. Pour adresser un message de signalisation à tous les équipements utilisateurs dans une certaine zone, il existe des moyens détournés au niveau applicatif basés sur la localisation, par exemple de type cartographie, conjointement à la création d'un groupe ad-hoc. Cette solution n'est pas automatique ni immédiate. De plus, si un utilisateur entre dans cette zone, alors le groupe ad-hoc n'est plus à jour. Cette notion dynamique ne peut pas être gérée par les spécifications actuelles du 3GPP MCS.

Des messages de signalisation tels qu'une alerte de détresse (« emergency alert » selon la dénomination anglo-saxonne) ou une alerte de péril imminent (« imminent peril alert » selon la dénomination anglo-saxonne) sont prévues par le 3GPP MCS, mais ces alertes sont adressées individuellement aux équipements utilisateurs.

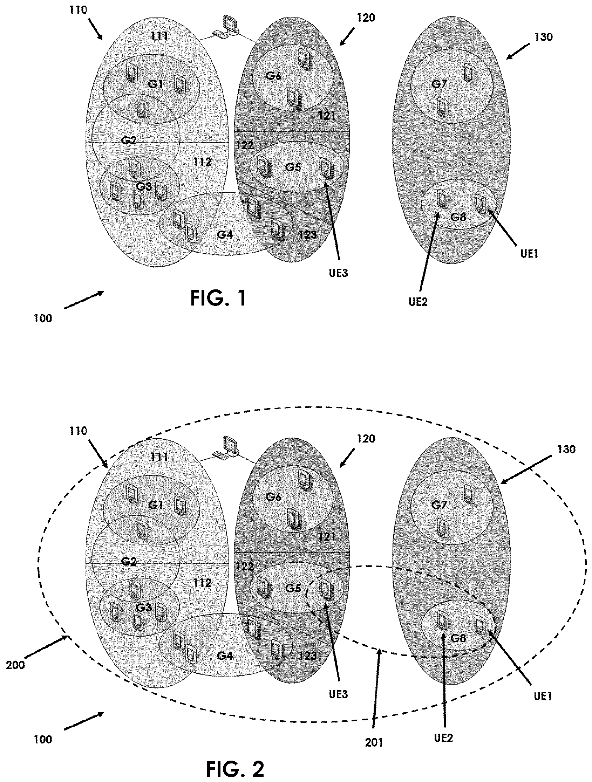

[Fig. 1] La figure 1 montre une représentation schématique d'un réseau PMR de l'art antérieur.

On remarque à la figure 1 que le réseau 100 comprend plusieurs équipements utilisateurs (UE1, UE2) appartenant à des organisations 110, 120 et 130 et/ou à des sous-organisations 111, 112, 121, 122, et 123. Les équipements utilisateurs sont affiliés à des groupes de communication. Par exemple, l'équipement utilisateur UE1 est affilié au groupe de communication G8, de la même façon que l'équipement utilisateur UE2. L'équipement utilisateur UE3 est affilié au groupe de communication G5.

Une alerte de détresse est une alerte émise par un équipement utilisateur lorsque son utilisateur est en danger. Par exemple, à la Figure 1, l'équipement utilisateur UE1 émet une alerte de détresse. L'équipement utilisateur UE1 appartient au groupe de communication G8, qui a été désigné, par exemple par un opérateur, comme étant un « groupe d'urgence dédié » de l'équipement utilisateur UE1 tel que décrit dans la Spécification Technique 3GPP Révision 16 (Rel.16) TS 23.280 v16.2.0 de Mars 2019. L'alerte de détresse est envoyée à chaque équipement utilisateur du groupe de communication G8 désigné comme étant le « groupe d'urgence dédié » de l'équipement utilisateur UE1. L'alerte de détresse est donc envoyée à l'équipement utilisateur UE2 car il est affilié à G8.

Cependant, ce groupe de communication G8 ne permet pas d'annoncer la disponibilité de services, par exemple pour informer un utilisateur qu'il se trouve dans une zone où une urgence est en cours et qu'il pourrait rejoindre un groupe de communication assigné à la gestion de cette urgence. En effet, les groupes de communication ont été créés précédemment et le « groupe d'urgence dédié » a été désigné précédemment parmi les groupes de communication. Deux utilisateurs qui n'ont donc pas de groupe de communication en commun ne pourront donc pas par exemple être tous les deux informés d'une urgence déclenchée par un équipement utilisateur.

Par exemple, à la figure 1, les deux utilisateurs utilisant les deux équipements utilisateurs UE2 et UE3 ne pourront être tous les deux informés de l'alerte de détresse déclenchée par l'équipement utilisateur UE1 car ils n'appartiennent pas tous les deux au groupe de communication G8 qui a été désigné comme « groupe d'urgence dédié ». Pourtant, si l'organisation 120 est par exemple une compagnie de pompiers, et que l'organisation 130 est par exemple une compagnie de police, il aurait pu être intéressant pour l'équipement utilisateur UE3 d'être informé de la détresse de UE1 même s'il n'appartient pas à son groupe de communication G8.

Un « effet de silo » apparaît lié aux groupes de communication. En effet, un utilisateur n'a pas forcément besoin de communiquer et donc d'être dans un groupe de communication avec certains autres équipements utilisateurs. Dans certains cas, pour des raisons de confidentialité, il peut même devoir ne pas être dans le même groupe de communication que certains autres équipements utilisateurs. Par exemple, il peut être interdit aux équipements utilisateurs UE3 et UE2 de pouvoir communiquer, et donc d'être dans le même groupe de communication pour des raisons de confidentialité. Cela ne permet pas de pouvoir informer les deux équipement utilisateurs d'un évènement par exemple.

De plus, ce principe ne permet pas d'envoyer des messages de signalisation à des équipements utilisateurs se trouvant dans une zone donnée car les équipements utilisateurs ne peuvent être localisés.

Enfin, il n'est pas simple dans le standard 3GPP MCS d'émettre des messages d'annonce de disponibilité de services pour un utilisateur ou un groupe d'utilisateurs.

Il existe donc un besoin pour un utilisateur de pouvoir recevoir des messages d'annonce de disponibilité de services en fonction de sa localisation, de son rôle ou de ses droits.

Le document « Functional Alias Enhancement (chapter 5.9a) » 22280_CR0055R5_(REL-16)_S1-180565_WAS_S1-180532_WAS_S1-180513_WAS_S1-180447_WAS_S1-180430_WAS_S1-180112_TS22.280_CR_CHAPTER3.1_5.9A FUNCTIONAL ALIAS, 3RD GENERATION PARTNERSHIP PROJET, vol SA WG1, no. Fukuoka, Japan, 20180205 - 20180209 19 Mars 2018, de UIC et al, extrait de l'internet, URL : http://www.3gpp.org/ftp/Meetings%5F3GPP%5FSYNC/SA/Docs/ est connu de l'état de la technique.

### RESUME DE L'INVENTION

L'invention offre une solution aux problèmes évoqués précédemment, en permettant des annonces de disponibilité de service en fonction d'un ou plusieurs paramètres, à un ou plusieurs équipements utilisateurs n'appartenant pas forcément aux mêmes groupes de communication.

Un aspect de l'invention concerne un réseau de communication selon la revendication 1.

Grâce à l'invention, il est possible d'annoncer la disponibilité d'un service à au moins un équipement utilisateur. De plus, il est possible d'annoncer la disponibilité de ce service en fonction d'un paramètre. En effet, les groupes dédiés à la signalisation permettent de multidiffuser l'annonce de disponibilité de service à tous les équipements utilisateurs affiliés à ce groupe, ce qui permet d'ajouter de l'intelligence embarquée dans les équipements utilisateurs. Grâce à l'invention, chaque équipement utilisateur du groupe dédié à la signalisation reçoit l'annonce de disponibilité de service et peut alors décider s'il est capable et/ou autorisé à utiliser ce service. Les groupes étant dédiés à la signalisation, ils permettent d'annoncer la disponibilité d'un service à une pluralité d'équipements utilisateurs présentant par exemple une même caractéristique, par exemple un même niveau hiérarchique, ou par exemple l'appartenance à une même organisation. Ainsi, deux utilisateurs appartenant à une même organisation, par exemple une compagnie ferroviaire, mais n'ayant aucun groupe de communication en commun car exerçant par exemple des métiers différents, peuvent recevoir tous deux une annonce de disponibilité de service en appartenant au même groupe dédié à la signalisation, par exemple car ils ont un même niveau hiérarchique dans l'organisation.

L'invention permet d'éviter « l'effet de silo » lié aux groupes de communication. En effet, un utilisateur n'a pas forcément besoin de communiquer et donc d'être dans un groupe de communication avec certains autres équipements utilisateurs. Dans certains cas, pour des raisons de confidentialité, il peut même devoir ne pas être dans le même groupe de communication que certains autres équipements utilisateurs. Cependant, il peut avoir besoin de recevoir une annonce de disponibilité de service destinée aussi à ces autres équipements utilisateurs. Les groupes dédiés à la signalisation de l'invention permettent ces annonces sans avoir à créer un groupe de communication. Ainsi, les groupes dédiés à la signalisation sont invisibles de l'utilisateur et permettent une meilleure organisation et une gestion des annonces de disponibilité de service sans avoir à se soucier de problèmes de confidentialité.

Outre les caractéristiques qui viennent d'être évoquées dans le paragraphe précédent, le réseau de communication selon un aspect de l'invention peut présenter une ou plusieurs caractéristiques complémentaires parmi les suivantes, considérées individuellement ou selon toutes les combinaisons techniquement possibles :
- Le réseau de communication est un réseau de communication selon le standard 3GPP MCS.
- le au moins un équipement utilisateur de la pluralité d'équipements utilisateurs est affilié à au moins un deuxième groupe dédié à la signalisation.
- l'affiliation d'au moins un équipement utilisateur de la pluralité d'équipements utilisateurs à au moins un groupe dédié à la signalisation est réalisée par une affiliation implicite.
- les groupes dédiés à la signalisation sont définis par configuration du réseau de communication.
- la disponibilité d'au moins un service pour un groupe dédié à la signalisation est annoncée par l'envoi d'une annonce de disponibilité de service à chaque équipement utilisateur affilié au groupe dédié à la signalisation.
- l'annonce de disponibilité de service comprend au moins un paramètre parmi les paramètres de localisation et d'adresse fonctionnelle.
- l'annonce de disponibilité de service est envoyée à une pluralité de groupes dédiés à la signalisation.
- l'annonce de disponibilité de service annonce la disponibilité d'au moins un service parmi les services d'alerte de détresse, de péril imminent, de communication privée, de communication de groupe en multidiffusion, de communication système, de visualisation ambiante de groupe et d'écoute ambiante de groupe.
- l'annonce de disponibilité de service est émise périodiquement.
- le réseau de communication comprend au moins un groupe de signalisation associé à une localisation.

Un avantage de l'affiliation à plusieurs groupes dédiés à la signalisation d'un même équipement utilisateur est qu'il peut recevoir des annonces de disponibilité de service de type différent et pour des raisons différentes : par exemple, parce qu'il appartient à un groupe dédié à la signalisation rassemblant les utilisateurs de même niveau hiérarchique que lui et par exemple parce qu'il appartient à un groupe rassemblant les utilisateurs aptes à porter secours.

Une localisation peut être ajoutée dans l'annonce de disponibilité de service permettant avantageusement de croiser un paramètre comme par exemple celui qui définit l'utilisateur par son appartenance au groupe dédié à la signalisation auquel l'annonce a été envoyée comme par exemple sa capacité à porter secours par exemple en étant pompier avec la localisation pour n'annoncer la disponibilité d'un service qu'aux utilisateurs se trouvant dans cette localisation.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau PMR de l'art antérieur.
- La figure 2 montre une représentation schématique d'un réseau de communication comprenant des groupes dédiés à la signalisation selon l'invention.
- La figure 3 montre une représentation schématique d'un réseau de communication comprenant des groupes dédiés à la signalisation selon l'invention.

### DESCRIPTION DETAILLEE

Les figures sont présentées à titre indicatif et nullement limitatif de l'invention.

Sauf précision contraire, un même élément apparaissant sur des figures différentes présente une référence unique.

[Fig. 2] La figure 2 montre une représentation schématique d'un réseau de communication comprenant des groupes dédiés à la signalisation selon l'invention.

On entend par « réseau de communication », un réseau permettant d'accéder à des services de communication, c'est-à-dire à des services liés à de la communication, par exemple l'accès à l'audio, à la vidéo ou encore à une messagerie avec fichiers pour interagir avec un ou plusieurs équipements utilisateurs. Les services de communication permettent d'établir des communications privées entre deux équipements utilisateurs ou des communications de groupe entre les équipements utilisateurs affiliés à un même groupe multimédia.

On entend par « groupe multimédia » un groupe virtuel regroupant plusieurs équipements utilisateurs pouvant interagir entre eux une fois authentifiés via un serveur du réseau de communication permettant l'accès au groupe multimédia.

Le réseau de communication 100 représenté à la Figure 2 comprend une pluralité de groupes dédiés à la signalisation. Le réseau de communication 100 comprend un groupe dédié à la signalisation 200 auquel tous les équipements utilisateurs du réseau de communication 100 sont affiliés. Cela permet d'annoncer la disponibilité de services à tous les équipements utilisateurs du réseau de communication 100. Le groupe étant dédié à la signalisation, il permet de ne pas avoir à créer de groupe de communication regroupant tous les équipements utilisateurs du réseau et donc de respecter des règles de confidentialité et de simplifier la gestion de réseau de communication 100.

Les groupes de signalisation 200 et 201 sont créés par un opérateur du réseau de communication 100. Un réseau de communication 100 peut comprendre plusieurs groupes dédiés à la signalisation. Le ou les opérateurs les ayant créés peuvent avoir fait le choix de refléter le partitionnement des organisations 110, 120 et 130, par exemple en créant un groupe dédié à la signalisation pour chaque organisation 110, 120 et 130, et en créant en outre un groupe dédié à la signalisation par sous-organisation 111, 112, 121, 122 et 123. L'opérateur peut aussi créer des groupes dédiés à la signalisation inter-organisations comme le groupe dédié à la signalisation 201.

Ainsi, les groupes dédiés à la signalisation selon l'invention permettent de refléter le partitionnement et la hiérarchie des organisations au sein desquelles ils sont mis en oeuvre, tout en respectant les critères de confidentialité en ne permettant pas la communication entre tous les équipements utilisateurs du réseau de communication 100.

Les groupes dédiés à la signalisation sont des groupes d'échange de données de signalisation. Ils n'échangent donc pas de médias tels que de la vidéo ou de la voix. Par exemple, dans le cas d'un réseau de communication selon le standard 3GPP MCS, ils sont des groupes d'échange de données de type « MCData ». On entend par « réseau de communication selon le standard 3GPP MCS », un réseau de communication compatible avec le standard 3GPP MCS et plus particulièrement avec la version actuelle du 3GPP qui est la version 15, avec les versions précédentes à partir de la version 13 et avec les versions suivantes intégrant toutes les caractéristiques de l'invention

Un ou plusieurs équipements utilisateurs sont affiliés aux groupes dédiés à la signalisation créés par l'opérateur, soit en étant affiliés implicitement comme le permet le standard 3GPP MCS, c'est-à-dire en étant affiliés de manière contrainte par le système régissant le réseau, soit en choisissant de s'affilier à un groupe dédié à la signalisation. L'utilisateur n'ayant pas connaissance des groupes de signalisation auquel il est affilié, l'équipement utilisateur choisit de s'affilier ou non à un groupe dédié à la signalisation, lorsque l'affiliation ne lui est pas contrainte, en mettant en oeuvre, par exemple par un processeur de l'équipement utilisateur, un algorithme enregistré en mémoire de l'équipement utilisateur.

Le réseau de communication peut être fixe, par exemple un réseau de communication couvrant une entreprise, ou mobile, par exemple tactique, c'est-à-dire utilisé dans le cas d'une mission des forces spéciales.

Un équipement utilisateur UE1, UE2 et UE3 est par exemple un smartphone, une tablette, un ordinateur portable ou tout autre dispositif permettant de communiquer au sein d'un réseau.

On entend par groupe « dédié à la signalisation » un groupe d'équipements utilisateurs ne permettant que la transmission de messages de signalisation, par exemple des messages de contrôle, des messages d'annonce de disponibilité de service, ou tout autre type de messages permettant l'établissement de communications au sein du réseau et la gestion du réseau. Les messages d'annonce de disponibilité de service peuvent être par exemple des notifications.

Le réseau de communication 100 comprend un autre groupe dédié à la signalisation 201 comprenant les équipements utilisateurs UE1 et UE2 affiliés au groupe de communication G8 et UE3 affilié au groupe de communication G5.

Les groupes dédiés à la signalisation 201 permettent d'éviter l'« effet silo » rencontré lorsque des équipements utilisateurs se trouvent dans des organisations 120 et 130 différentes et dans des groupes de communication G5 et G8 différents. Grâce au groupe dédié à la signalisation 201, les équipements utilisateurs UE1, UE2 et UE3 peuvent recevoir des messages de signalisation permettant par exemple l'annonce de la disponibilité d'un ou plusieurs services.

Les messages de signalisation peuvent être émis par des équipements utilisateurs du réseau de communication 100, par un serveur du réseau, par un équipement superviseur du réseau ou par tout autre équipement connecté au réseau.

Une annonce de disponibilité de service est émise à un groupe dédié à la signalisation ou à plusieurs groupes dédiés à la signalisation.

Ces services peuvent être tout service qui nécessite d'être annoncé à l'équipement utilisateur, comme par exemple des services d'alerte de détresse, de péril imminent, de communication privée, de communication de groupe en multidiffusion, de communication système, de visualisation ambiante de groupe et d'écoute ambiante de groupe.

Par exemple, dans le cas de services dits « legacy » (selon la dénomination anglo-saxonne pour « traditionnels »), c'est-à-dire les services déjà existants par exemple dans le standard 3GPP MCS, tels que les alertes de détresse et de péril imminent, les groupes dédiés à la signalisation permettent d'annoncer qu'un des équipements utilisateurs du groupe dédié à la signalisation est en détresse ou qu'un péril est imminent à plusieurs équipements utilisateurs qui ne seraient pas forcément affiliés à un même groupe de communication.

Dans le cas des communications privées ou des communications de groupe en multidiffusion, cela peut permettre par exemple d'annoncer qu'un appel est en cours et de proposer à un équipement utilisateur de rejoindre la communication avec des équipements utilisateurs qui ne sont pas forcément dans un de ses groupes de communication. Cela permet d'annoncer la disponibilité d'un service traditionnel, c'est-à-dire déjà connu, à plusieurs équipements utilisateurs ne se trouvant pas forcément dans le même groupe de communication.

Ainsi, dans le cas par exemple d'un réseau de communication au sein d'un aéroport, les utilisateurs sont désignés par leur profession (bagagiste, agent de sécurité, pilote, équipage, pompier etc.) et travaillent sur des vols différents au long de la journée. Les utilisateurs choisissent leur vol en fonction de leur planning de vol. Chaque utilisateur doit pouvoir communiquer avec tous les autres utilisateurs ayant le même métier ou le même vol, ou ayant le même métier que lui sur le même vol.

Grâce aux groupes dédiés à la signalisation, une annonce de disponibilité de service peut être émise à tous les utilisateurs ayant le même métier, ayant le même vol, ou ayant le même métier et le même vol grâce à un ou plusieurs paramètres de l'annonce de disponibilité de service. Ce paramètre peut par exemple être une adresse fonctionnelle. On entend par « adresse fonctionnelle » un identifiant par exemple lié à une profession, tel qu'un code métier, lié à un vol, tel qu'un code de vol ou tout autre identifiant permettant d'adresser un équipement utilisateur. Cette annonce de disponibilité de service peut annoncer la disponibilité d'une communication privée ou d'une communication de groupe entre tous les utilisateurs ayant le même métier et proposer à chaque utilisateur ayant le même métier de rejoindre ladite communication privée. Ainsi, même si les utilisateurs ayant le même métier ne se trouvaient pas dans le même groupe de communication, ils peuvent rejoindre un groupe grâce à cette annonce.

L'annonce de disponibilité d'une communication privée ou d'une communication de groupe peut être envoyée à tous les équipements utilisateurs, chaque équipement utilisateur décidant alors, par exemple à l'aide d'un algorithme enregistré en mémoire et mis en oeuvre par un processeur de l'équipement utilisateur, s'il remplit les critères donnés par le ou les paramètres compris dans l'annonce de disponibilité de service et donc s'il doit rejoindre la communication annoncée.

Les groupes dédiés à la signalisation permettent en outre des annonces de disponibilité de services « nouvelle génération », tels que des services multimédias. Par exemple, ces services peuvent être des services de visualisation ambiante de groupe et d'écoute ambiante de groupe, tels que définis dans le standard 3GPP MCS. Grâce à l'invention, ces services ne sont plus adressés individuellement aux équipements utilisateurs mais il est possible d'adresser une pluralité d'équipements utilisateurs.

Un service de « visualisation ambiante de groupe » (selon la dénomination anglo-saxonne « group ambient viewing ») permet à un équipement opérateur tel qu'un « dispatcher » (selon la dénomination anglo-saxonne pour « répartiteur », terme utilisé pour mentionner un « équipement opérateur de salle de contrôle »), équipement fixe permettant de communiquer avec des équipements utilisateurs et/ou la gestion du réseau, principalement à partir de salles de contrôle, d'accéder au flux vidéo d'un équipement utilisateur en direct. L'utilisateur peut ou non être informé de la réception du flux vidéo par la salle de contrôle.

Un service d' « écoute ambiante de groupe » (selon la dénomination anglo-saxonne « group ambient listening ») permet à un équipement opérateur de salle de contrôle, d'accéder au flux audio d'un équipement utilisateur en direct. L'utilisateur peut ou non être informé de la réception du flux audio par la salle de contrôle.

Ces deux services multimédias peuvent être annoncés à un ou plusieurs équipements utilisateurs affiliés à un ou plusieurs groupes dédiés à la signalisation à partir par exemple d'un équipement fixe ou d'un autre équipement utilisateur. Les groupes dédiés à la signalisation permettent avantageusement de recevoir les flux audio et/ou vidéo d'équipements utilisateurs grâce à des messages de signalisation tels que des messages d'annonce de disponibilité de service de visualisation ambiante de groupe ou d'écoute ambiante de groupe. Ainsi, chaque équipement utilisateur recevant l'annonce de disponibilité de service, c'est-à-dire chaque équipement utilisateur affilié au ou aux groupes dédiés à la signalisation destinataires de l'annonce peut décider ou non d'utiliser ce service annoncé.

Un équipement utilisateur décide d'utiliser un service soit par un traitement du message de signalisation, reçu car il est affilié à un groupe dédié à la signalisation destinataire dudit message de signalisation, par un algorithme enregistré en mémoire et mis en oeuvre par un processeur, soit en demandant à l'utilisateur de l'équipement utilisateur s'il choisit d'utiliser le service disponible annoncé.

Par exemple, dans le cas d'une communication de groupe en multidiffusion annoncé comme disponible à un groupe dédié à la signalisation, les équipements utilisateurs affiliés au groupe dédié à la signalisation peuvent demander à l'utilisateur, par exemple par un message affiché sur un écran de l'équipement utilisateur, si l'utilisateur souhaite rejoindre la communication en multidiffusion.

Dans un autre exemple, dans le cas d'un service de visualisation ambiante de groupe, il peut être nécessaire que l'utilisateur ne sache pas que le service est disponible et que l'équipement utilisateur utilise le service disponible annoncé, par exemple pour des raisons de discrétion. Dans ce cas, l'équipement utilisateur disposant d'une intelligence embarquée, par exemple d'un algorithme en mémoire interne et mis en oeuvre par un processeur, décide par lui-même d'utiliser ou non ce service, par exemple en fonction de paramètres compris dans l'annonce de disponibilité de service.

L'annonce de disponibilité de service peut comprendre un ou plusieurs paramètres, permettant de croiser plusieurs paramètres et donc de n'adresser qu'un certain nombre ou un type précis d'équipements utilisateurs.

Par exemple, l'annonce de disponibilité de service peut comprendre un paramètre de localisation.

Dans le cas d'un service d'appel de détresse, l'annonce de service d'appel de détresse peut comprendre la localisation de l'équipement utilisateur à l'origine de l'appel de détresse. Cela permet de localiser l'équipement utilisateur à l'origine de l'appel de détresse et donc de localiser l'évènement.

La façon dont les équipement utilisateurs connaissent et/ou récupèrent leur localisation n'est pas un objet de l'invention. Cela peut être réalisé de façon connue de l'homme du métier, par exemple à partir d'un système GPS (selon la dénomination anglo-saxonne « Global Positioning System » pour « Système Mondial de Positionnement »).

Une annonce de disponibilité de service comprenant une localisation est envoyée à tous les équipements utilisateurs d'un ou de plusieurs groupes dédiés à la signalisation, quelle que soit leur localisation.

Un équipement utilisateur recevant une annonce de disponibilité de service comprenant une localisation utilise son intelligence embarquée, par exemple un algorithme mis en oeuvre par un processeur enregistré en mémoire, pour décider si le service est disponible pour lui. L'algorithme de l'équipement utilisateur récupère par exemple sa position et lit la localisation comprise dans l'annonce de disponibilité de service. Il analyse alors si sa position est proche de la localisation comprise dans l'annonce de disponibilité de service reçue.

On entend que sa position est « proche » de la localisation comprise dans l'annonce de disponibilité de service quand la position de l'équipement utilisateur est dans un rayon inférieur à une valeur prédéterminée par rapport à la localisation comprise dans l'annonce de disponibilité de service. Cette valeur prédéterminée de rayon peut être enregistrée en mémoire de l'équipement utilisateur, par exemple configurée par un opérateur, ou peut être comprise dans l'annonce de disponibilité de service.

Ainsi, tous les équipements utilisateurs affiliés au groupe dédié à la signalisation recevront l'annonce de disponibilité de service via le groupe dédié à la signalisation regroupant par exemple des pompiers, l'annonce comprenant la localisation de l'évènement. Seuls les équipements utilisateurs se trouvant dans la localisation seront alors aptes à utiliser le service. Cela permet par exemple dans ce cas d'annoncer la possibilité de rejoindre une conversation de groupe en multidiffusion entre les pompiers situés dans la localisation où un évènement a eu lieu, ou d'annoncer l'évènement seulement aux utilisateurs proches de la position de l'émetteur.

Concernant les services de visualisation ambiante de groupe ou encore d'écoute ambiante de groupe, la localisation comprise dans l'annonce de disponibilité de service est la localisation que l'émetteur a ciblée comme étant la zone qu'il souhaite voir ou écouter.

Dans une annonce de disponibilité de service comprenant une localisation, la localisation peut être ajoutée soit par l'émetteur soit par un équipement du réseau tel qu'un serveur.

La localisation comprise dans une annonce de disponibilité de service peut permettre de créer une zone de service. Par exemple, lorsqu'un équipement utilisateur entre dans cette zone, il peut être notifié d'un service disponible dans cette zone.

Cela peut être réalisé de plusieurs manières. Le système peut détecter qu'un équipement utilisateur est entré dans la zone et affilier automatiquement l'équipement utilisateur à un groupe dédié à la signalisation lié à cette zone. La façon dont le système détecte qu'un équipement utilisateur est entré dans la zone ne fait pas partie de l'objet de l'invention. Une fois affilié, l'équipement utilisateur peut recevoir l'annonce de disponibilité de service et utiliser le service annoncé. Ainsi, un groupe dédié à la signalisation est associé à une localisation.

Une autre manière peut être d'envoyer périodiquement l'annonce de disponibilité de service à une pluralité d'équipements utilisateurs affiliés à des groupes dédiés à la signalisation déjà existants. Chaque équipement utilisateur vérifie alors périodiquement s'il est dans la zone de l'annonce de disponibilité de service et peut alors utiliser le service s'il est dans la zone.

Un autre paramètre qui peut être compris dans une annonce de disponibilité de service est par exemple un paramètre de niveau dans la hiérarchie, par exemple des droits de l'utilisateur, ou un paramètre lié au service, par exemple de quantité de batterie de l'équipement utilisateur restante si le service est consommateur de batterie.

En cas de service persistent, c'est-à-dire de service étant utilisable durant un temps assez long, par exemple plusieurs heures ou plusieurs jours, les annonces de disponibilité de service peuvent être envoyées périodiquement, par exemple toutes les minutes ou toutes les heures. Cela permet à un équipement utilisateur s'étant affilié récemment à un groupe dédié à la signalisation de recevoir l'annonce de disponibilité de service même s'il n'a rejoint le groupe dédié à la signalisation qu'après la première émission de l'annonce.

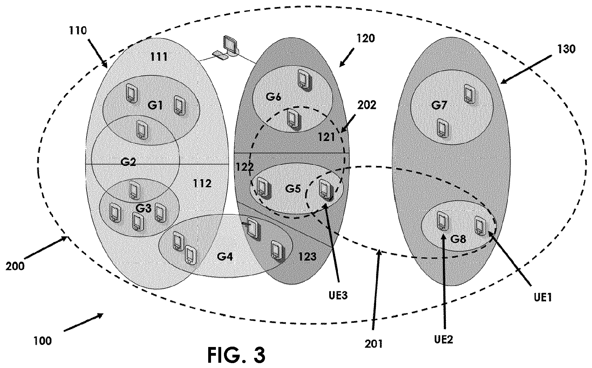

[Fig. 3] La figure 3 montre une représentation schématique d'un réseau de communication comprenant des groupes dédiés à la signalisation selon l'invention.

Dans la figure 3, un même équipement utilisateur UE3 est affilié à plusieurs groupes dédiés à la signalisation 200, 201 et 202.

Tous les équipements utilisateurs du réseau de communication 100 sont affilié au groupe dédié à la signalisation 200. Ainsi, il est possible d'annoncer une disponibilité de service à tous les équipements utilisateurs du réseau de communication 100.

Les équipements utilisateurs UE1, UE2 et UE3 sont affiliés au même groupe dédié à la signalisation 201, permettant de leur annoncer une disponibilité de service alors même qu'ils ne sont pas tous dans les mêmes groupes de communication.

L'équipement utilisateur UE3 est en outre affilié au groupe dédié à la signalisation 202, permettant de lui annoncer la disponibilité d'un service que les autres équipement utilisateurs UE1 et UE2 du groupe dédié à la signalisation 201 ne sont pas autorisés à utiliser et/ou ne peuvent pas utiliser.

Cela permet de respecter des critères de confidentialité, en appartenant à plusieurs groupes dédiés à la signalisation ayant des niveaux de confidentialité des services annoncés différents, et en n'ayant pas de groupe de communication entre certains équipements utilisateurs, par exemple entre les équipements utilisateurs UE1 et UE3.

Ainsi, un avantage des groupes de signalisation est qu'ils permettent d'adresser une pluralité d'équipements utilisateurs et d'adresser un nombre restreint d'équipements utilisateurs en fonction du service annoncé et des besoins, et donc une granularité des annonces tout en évitant l'effet silo des groupes de communication et en respectant des critères de confidentialité.

## Revendications

1. Réseau de communication (100) selon le standard 3rd Generation Partnership Program Mission-Critical Services, 3GPP MCS, permettant à une pluralité d'équipements utilisateurs (UE1, UE2, UE3) d'accéder à des services de communication une fois authentifiés via un serveur du réseau de communication, la communication étant une communication privée ou une communication au sein d'un groupe multimédia auquel au moins un équipement utilisateur de la pluralité d'équipements utilisateurs (UE1, UE2, UE3) est affilié, le réseau de communication (100) étant **caractérisé en ce qu'**il comprend en outre au moins un groupe dédié à la signalisation (200, 201, 202) auquel au moins un équipement utilisateur de la pluralité d'équipements utilisateurs (UE1, UE2, UE3) est affilié, ledit groupe dédié à la signalisation ne permettant que la transmission de messages de signalisation et permettant d'annoncer à chaque équipement utilisateur affilié audit groupe dédié à la signalisation (200, 201, 202) la disponibilité d'au moins un service.

2. Réseau de communication (100) selon l'une quelconque des revendications précédentes **caractérisé en ce que** le au moins un équipement utilisateur de la pluralité d'équipements utilisateurs (UE1, UE2, UE3) est affilié à au moins un deuxième groupe dédié à la signalisation (200, 201, 202).

3. Réseau de communication (100) selon l'une quelconque des revendications précédentes **caractérisé en ce que** l'affiliation d'au moins un équipement utilisateur de la pluralité d'équipements utilisateurs (UE1, UE2, UE3) à au moins un groupe dédié à la signalisation (200, 201, 202) est réalisée par une affiliation implicite.

4. Réseau de communication (100) selon l'une quelconque des revendications précédentes **caractérisé en ce que** les groupes dédiés à la signalisation (200, 201, 202) sont définis par configuration du réseau de communication (100).

5. Réseau de communication (100) selon l'une quelconque des revendications précédentes **caractérisé en ce que** la disponibilité d'au moins un service pour un groupe dédié à la signalisation (200, 201, 202) est annoncée par l'envoi d'une annonce de disponibilité de service à chaque équipement utilisateur (UE1, UE2, UE3) affilié au groupe dédié à la signalisation (200, 201, 202).

6. Réseau de communication (100) selon la revendication précédente **caractérisé en ce que** l'annonce de disponibilité de service comprend au moins un paramètre parmi les paramètres de localisation et d'adresse fonctionnelle.

7. Réseau de communication (100) selon l'une des revendications 5 à 6 **caractérisé en ce que** l'annonce de disponibilité de service est envoyée à une pluralité de groupes dédiés à la signalisation (200, 201, 202).

8. Réseau de communication (100) selon l'une des revendications 5 à 7 **caractérisé en ce que** l'annonce de disponibilité de service annonce la disponibilité d'au moins un service parmi les services d'alerte de détresse, de péril imminent, de communication privée, de communication de groupe en multidiffusion, de communication système, de visualisation ambiante de groupe et d'écoute ambiante de groupe.

9. Réseau de communication (100) selon l'une des revendications 5 à 8 **caractérisé en ce que** l'annonce de disponibilité de service est émise périodiquement.

10. Réseau de communication (100) selon l'une quelconque des revendications précédentes **caractérisé en ce qu'**il comprend au moins un groupe de signalisation associé à une localisation.

## Patentansprüche

1. Kommunikationsnetz (100) gemäß dem Standard 3rd Generation Partnership Program Mission-Critical Services, 3GPP MCS, das einer Vielzahl von Benutzergeräten (UE1, UE2, UE3) den Zugriff auf Kommunikationsdienste ermöglicht, nachdem sie über einen Server des Kommunikationsnetzes authentifiziert wurden, wobei die Kommunikation eine private Kommunikation oder eine Kommunikation innerhalb einer Multimediagruppe ist, der mindestens eines der mehreren Benutzergeräte (UE1, UE2, UE3) angehört, wobei das Kommunikationsnetz (100) **dadurch gekennzeichnet ist, dass** es ferner mindestens eine für die Signalisierung vorgesehene Gruppe (200, 201, 202) umfasst, der mindestens eines der mehreren Benutzergeräte (UE1, UE2, UE3) angehört, wobei die für die Signalisierung vorgesehene Gruppe nur die Übertragung von Signalisierungsnachrichten ermöglicht, und auch ermöglicht, jedem der der für die Signalisierung vorgesehenen Gruppe (200, 201, 202) zugehörigen Benutzergeräte die Verfügbarkeit von mindestens einem Dienst anzukündigen.

2. Kommunikationsnetz (100) nach einem der vorhergehenden Ansprüche, **dadurch gekennzeichnet, dass** das mindestens eine Benutzergerät aus der Vielzahl von Benutzergeräten (UE1, UE2, UE3) mindestens einer zweiten Gruppe angehört, die für die Signalisierung (200, 201, 202) vorgesehen ist.

3. Kommunikationsnetz (100) nach einem der vorhergehenden Ansprüche, **dadurch gekennzeichnet, dass** die Zugehörigkeit mindestens eines Benutzergeräts aus der Vielzahl von Benutzergeräten (UE1, UE2, UE3) zu mindestens einer für die Signalisierung vorgesehenen Gruppe (200, 201, 202) durch eine implizite Zugehörigkeit erreicht wird.

4. Kommunikationsnetz (100) nach einem der vorhergehenden Ansprüche, **dadurch gekennzeichnet, dass** die für die Signalisierung vorgesehenen Gruppen (200, 201, 202) durch Konfiguration des Kommunikationsnetzes (100) definiert werden.

5. Kommunikationsnetz (100) nach einem der vorhergehenden Ansprüche, **dadurch gekennzeichnet, dass** die Verfügbarkeit mindestens eines Dienstes für eine für die Signalisierung vorgesehene Gruppe (200, 201, 202) durch das Senden einer Dienstverfügbarkeitsmeldung an jedes Benutzergerät (UE1, UE2, UE3), das der der Signalisierung gewidmeten Gruppe (200, 201, 202) angegliedert ist, angekündigt wird.

6. Kommunikationsnetz (100) nach dem vorhergehenden Anspruch, **dadurch gekennzeichnet, dass** die Dienstverfügbarkeitsmeldung mindestens einen der Parameter Standort und funktionale Adresse umfasst.

7. Kommunikationsnetz (100) nach einem der Ansprüche 5 bis 6, **dadurch gekennzeichnet, dass** die Dienstverfügbarkeitsmeldung an eine Vielzahl von der Signalisierung gewidmeten Gruppen (200, 201, 202) gesendet wird.

8. Kommunikationsnetz (100) nach einem der Ansprüche 5 bis 7, **dadurch gekennzeichnet, dass** die Dienstverfügbarkeitsmeldung die Verfügbarkeit von mindestens einem der Dienste Notrufalarm, drohende Gefahr, private Kommunikation, Multicast-Gruppenkommunikation, Systemkommunikation, Gruppenumgebungsvisualisierung und Gruppenumgebungshören ankündigt.

9. Kommunikationsnetz (100) nach einem der Ansprüche 5 bis 8, **dadurch gekennzeichnet, dass** die Dienstverfügbarkeitsmeldung periodisch ausgegeben wird.

10. Kommunikationsnetz (100) nach einem der vorhergehenden Ansprüche, **dadurch gekennzeichnet, dass** es mindestens eine Signalisierungsgruppe umfasst, die einem Standort zugeordnet ist.

## Claims

1. Communication network (100) according to the 3rd Generation Partnership Program Mission-Critical Services, 3GPP MCS, standard enabling a plurality of user devices (UE1, UE2, UE3) to access communication services once authenticated via a communication network server, the communication being a private communication or a communication within a multimedia group to which at least one user device of the plurality of user devices (UE1, UE2, UE3) is affiliated, the communication network (100) being **characterised in that** it further comprises at least one dedicated signalling group (200, 201, 202) to which at least one user device of the plurality of user devices (UE1, UE2, UE3) is affiliated, said dedicated signalling group allowing only the transmission of signalling messages and making it possible to announce to each user device affiliated to said dedicated signalling group (200, 201, 202) the availability of at least one service.

2. Communication network (100) according to the preceding claim **characterised in that** the at least one user device of the plurality of user devices (UE1, UE2, UE3) is affiliated to at least one second dedicated signalling group (200, 201, 202).

3. Communication network (100) according to any of the preceding claims **characterised in that** the affiliation of at least one user device of the plurality of user devices (UE1, UE2, UE3) to at least one dedicated signalling group (200, 201, 202) is done by implicit affiliation.

4. Communication network (100) according to any of the preceding claims **characterised in that** the dedicated signalling groups (200, 201, 202) are defined by configuration of the communication network (100).

5. Communication network (100) according to any of the preceding claims **characterised in that** the availability of at least one service for a dedicated signalling group (200, 201, 202) is announced by the sending of a service availability announcement to each user device (UE1, UE2, UE3) affiliated to the dedicated signalling group (200, 201, 202).

6. Communication network (100) according to the preceding claim **characterised in that** the service availability announcement comprises at least one parameter among location and functional address parameters.

7. Communication network (100) according to one of claims 5 to 6 **characterised in that** the service availability announcement is sent to a plurality of dedicated signalling groups (200, 201, 202).

8. Communication network (100) according to one of claims 5 to 7 **characterised in that** the service availability announcement announces the availability of at least one service among the services of emergency alert, imminent peril, private communication, multicast group communication, system communication, ambient viewing group and ambient listening group.

9. Communication network (100) according to one of claims 5 to 8 **characterised in that** the service availability announcement is sent periodically.

10. Communication network (100) according to any of the preceding claims **characterised in that** it comprises at least one signalling group associated with a location.
